# EUROPEAN PATENT SPECIFICATION

(11) **EP 3 897 328 B1**
(45) Date of publication and mention of the grant of the patent: **09.08.2023**
(21) Application number: 19820800.1
(22) Date of filing: 18.12.2019
(51) Int. Cl.: A47L 9/28

(54) **AUTONOMOUS HOUSEHOLD APPLIANCE**
AUTONOMES HAUSHALTSGERÄT
APPAREIL DOMESTIQUE AUTONOME

(30) Priority: 18.12.2018 EP 18213357
(43) Date of publication of application: 27.10.2021
(73) Proprietor: trinamiX GmbH, 67063 Ludwigshafen am Rhein (DE)
(72) Inventor: METZ, Stefan, 67063 Ludwigshafen (DE); SEND, Robert, 76137 Karlsruhe (DE); BRUDER, Ingmar, 67063 Ludwigshafen (DE)
(74) Representative: BASF IP Association
(86) International application number: PCT/EP2019/086017
(87) International publication number: WO 2020/127530

(56) References cited:
- EP-A1- 3 108 787
- US-A1- 2017 344 063
- US-A1- 2017 364 091

## Description

### Technical field

The invention generally relates will to a device for performing at least one household task, a system, a method and a computer program. The devices, systems, methods and computer programs according to the present invention specifically may be employed, for example in various areas of daily life, where robots may be used, such as cleaning, specifically vacuuming or wiping, gardening, e.g. mowing, or the like. However, other applications are also possible.

### Background art

A large number of robots or autonomous guided vehicles configured for performing household tasks are known from prior art. The robots may be used, for example, for cleaning, e.g. vacuuming and wiping, mowing and surveillance. Without narrowing the scope, the invention will specifically be described with respect to household use.

US 2017/344063 A1 describes a cleaning device connecting to a mobile device through an interface. The cleaning device includes a trigger mechanism which includes at least one plate body, two elastic members connect to the plate body, and a baffle mechanism resting on the plate body. The baffle mechanism comprises at least one baffle, a torsion spring, and a processing unit. The baffle defines a first elastic sheet and the plate body defines a second elastic sheet. When a pressure is applied on the mobile device, the plate body is driven to rotate the baffle to make the first elastic sheet on the baffle contact the second elastic sheet on the plate body. The processing unit produces a trigger signal to execute a function of function modules when the first elastic sheet contacts the second elastic sheet.

EP 3 108 787 A1 describes a robot cleaner including a communication unit configured to communicate with the robot cleaner using a near field wireless communication (NFC) and a processor configured to detect a state of the robot cleaner among a plurality of predefined states I. In response to NFC tagging being performed with the mobile terminal, the processor controls the communication unit so as to transmit information corresponding to the detected state to the mobile terminal.

US 2017/0364091 A1 describes a network of modular, multitier mobile units that are each capable of collecting data for processing as a user uses them in their residence or business premises performing a task or a chore, or as they move about within an area in a property based on their mobility capabilities and current location. The modular, multitier mobile units are designed including NFC or other near or full contact pads on which emitters and/or sensor units and/or other robot mechanical/electrical units can be docked and powered without requiring connectors. The modular, multitier mobile unit networks are designed to function in many different tiers, such as tier zero node, tier one node, tier two node and tier three cloud node,

each having capabilities to process the collected data. The modular, multitier mobile units are capable of sharing the collected data and resources with each other. The tier three cloud node provides additional processing power that does not exist in lower level tiers and also provides artificial intelligence, voice recognition and synthesis, face recognition capabilities.

Despite the advantages involved in using robots configured for performing household tasks, such as for example cleaning, mowing and surveillance, several technical challenges remain. In general, robots configured for performing household tasks, need to be picked up by a user frequently, such as for cleaning or repairing purposes, or in case the household task is to be performed in areas that are nor inter-accessible to the robot, such as different floors of a building. Such robots often are heavy, which typically causes difficulties especially for small or elderly users. However, in general, every feature and additional function, for example additional sensors and WiFi receivers, of the robot contribute additional weight and costs. Thus, the robot's weight and costs increase with every feature and additional function.

### Problem to be solved

It is therefore desirable to provide means and methods which address the above mentioned technical challenges. Specifically, an autonomous household appliance for performing at least one household task as well as a household system and a method for temporarily augmenting the functionality of an autonomous household appliance shall be proposed which combine performing of a household task with additional functions and features while providing a lightweight and cost sensitive product.

### Disclosure of the invention

This problem is addressed by the devices, methods and computer programs with the features of the independent claims. Advantageous embodiments which might be realized in an isolated fashion or in any arbitrary combinations are listed in the dependent claims.

As used in the following, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may refer to a situation in which, besides B, no other element is present in A (i.e. a situation in which A solely and exclusively consists of B) and to a situation in which, besides B, one or more further elements are present in entity A, such as element C, elements C and D or even further elements.

Further, it shall be noted, that the terms "at least one", "one or more" or similar expressions indicating that a feature or element may be present once or more than once typically will be used only once when introducing the respective feature or element. In the following, in most cases, when referring to the respective feature or element, the expressions "at least one" or "more than one" will not be repeated, non-withstanding the fact, that the respective feature or element may be present once or more than once.

The subject-matter for which protection is sought is defined by the claims. In the following specification, the terms "preferably", "more preferably", "particularly", "more particularly", "specifically", "more specifically" or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in such way with other optional or non-optional features of the invention.

In a first aspect of the invention an autonomous household appliance configured for performing at least one household task is disclosed. The autonomous household appliance comprises at least one task unit arranged for performing the household task. The autonomous household appliance further comprises an interface element having at least one wire-bound coupling means, wherein the interface element is configured for releasably and temporarily coupling the autonomous household appliance to at least one smart device, wherein the autonomous household appliance is configured for accessing at least one sensor device of the at least one smart device via the interface element and for making use of at least one item of sensor information retrieved by the sensor device when performing the household task.

The term "autonomous household appliance" as used herein is a broad term and is to be given its ordinary and customary meaning to a person of ordinary skill in the art and is not to be limited to a special or customized meaning. The term specifically may refer, without limitation, to an arbitrary device configured for performing at least one household task autonomously. Thus, the autonomous household appliance may be configured for performing the household task in the absence of external assistance or instructions, such as for example without assistance from a user or control by a user. Specifically, the autonomous household appliance may be configured to react to specific situations independent from external input, by using preprogrammed routines, self-learning mechanisms or the like.

The autonomous household appliance may be an autonomously moving robot, specifically an autonomously moving robot selected from the group consisting of: a mowing robot; a cleaning robot, specifically a robotic vacuum cleaner, a wet-mopping robot or a combination thereof.

In particular, the autonomous household appliance, for example a consumer device, may be or may comprise a moving device such as a cleaning robot, mowing robot, or the like.

The term "household task" as used herein is a broad term and is to be given its ordinary and customary meaning to a person of ordinary skill in the art and is not to be limited to a special or customized meaning. The term specifically may refer, without limitation, to an arbitrary household related assignment to be performed by a robot. In particular, the household task may relate to cleaning surfaces, such as for example vacuum cleaning and/or wiping floors and/or washing surfaces and/or waxing surfaces and/or mopping surfaces. The household task may further relate to gardening, for example monitoring and/or fertilizing and/or watering plants and/or mowing grass and/or raking lawn and/or scarifying lawn. Further, the household task may refer to cleaning pools, windows, rain gutters or the like.

In particular, the household task may be selected from the group consisting of: cleaning, specifically floor cleaning, more specifically vacuum cleaning or wet mopping; maintenance; surveillance, specifically image or video based surveillance.

The term "task unit" as used herein is a broad term and is to be given its ordinary and customary meaning to a person of ordinary skill in the art and is not to be limited to a special or customized meaning. The term specifically may refer, without limitation, to a part and/or a combination of parts configured for performing the household task. Specifically, the task unit may be or may comprise matters to perform the household task, such as for example a vacuum cleaner for vacuum cleaning, a broom for brushing or sweeping, or the like.

The task unit may comprise at least one processor. In particular, the task unit may comprise at least one processor, such as a data processing device with software or hardware programming for performing the at least one household task. Specifically, the processor may be configured by software for controlling the at least one household task. Additionally or alternatively, the processor, specifically by software, may be configured for determining if the smart device is coupled to the interface element.

The processor, in case a coupling of the smart device to the interface element is detected, may be configured for accessing the at least one item of sensor information and for making use of the at least one item of sensor information in the controlling of the household task.

The term "interface element" as used herein is a broad term and is to be given its ordinary and customary meaning to a person of ordinary skill in the art and is not to be limited to a special or customized meaning. The term specifically may refer, without limitation, to an item or element forming a common boundary between two arbitrary devices of matter or space. In particular, the interface element may be an element or device for connecting two hardware devices, such as for example the autonomous household appliance and the smart device. Specifically, the interface element may be an item for connecting two devices so that they can be operated jointly or communicate with each other. In particular, the interface element may be configured for connecting the two devices, specifically electronically, such as for example the autonomous household appliance and the smart device, via at least one coupling means, such as at least one wire-bound coupling means, specifically via at least one cable or conductive wire.

Alternatively, the interface element may provide for a mechanical connection between the two devices, wherein a wireless electrical connection between the two devices is provided for, such as an electrical connection and/or a data exchange connection, e.g. via Bluetooth, NFC, inductive coupling or wireless charging. Thus, specifically, the hardware of the smart device and the hardware of the autonomous household appliance may be connected mechanically via the interface, whereas no wire-bound connection necessarily has to be present and wherein a communication and/or electrical connection may be provided by the interface element via one or more of Bluetooth, NFC, inductive coupling or wireless charging. As a third alternative, the interface element may provide for both a mechanical connection between the two devices and a wire-bound electrical connection.

The term "smart device" as used herein is a broad term and is to be given its ordinary and customary meaning to a person of ordinary skill in the art and is not to be limited to a special or customized meaning. The term specifically may refer, without limitation, to an electronics device or apparatus, more specifically a mobile electronics device, such as a cell phone or smartphone. Additionally or alternatively, the smart device may also refer to any type of computer, such as a phablet or tablet computer or laptop, specifically a mobile computer, more specifically a mobile computer having at least one sensor device, e.g. a camera. Thus, the smart device may for example be a mobile phone that performs many of the functions of a computer, typically having a touchscreen interface, Internet access, and an operating system capable of running downloaded apps. In particular, the smart device may be or may comprise a battery powered or accumulator powered device, preferably comprising battery containing at least one or both of lithium and cobalt. In particular, the smart device may be characterized by a screen and/or touch screen that fills at least 20 percent of the surface area of the device, preferably at least 30 percent of the surface area of the device, more preferably at least 40 percent of the surface area of the smart device. Preferably, the display and or touch screen may contain at least one element of lanthanum, terbium, praseodymium, europium, dysprosium, gadolinium.

The term "sensor device" as used herein is a broad term and is to be given its ordinary and customary meaning to a person of ordinary skill in the art and is not to be limited to a special or customized meaning. The term specifically may refer, without limitation, to an arbitrary device configured for one or more of detecting, measuring or monitoring at least one measurement variable or measurement property, generally also referred to as an item of sensor information, e.g. a variable or a property of an object and/or an environment. The sensor device may comprise at least one sensor or sensor element, such as a sensor which is capable of generating at least one measurement signal, such as an electrical measurement signal, which is a qualitative or quantitative indicator of the measurement variable or measurement property. The sensor, for example, may be or may comprise a camera sensor. In particular, the sensor device may be or may comprise one or more of a 2D camera, specifically an imaging device for taking two dimensional images or videos, a 3D camera, specifically an imaging device for taking three dimensional images or videos, more specifically an imaging device configured for using a shape-from-motion algorithm for determining three dimensional data, a GPS sensor, a WiFi sensor, a Bluetooth sensor, and an odometrical sensor, specifically a travel distance sensor. In particular, the sensor device may be configured for retrieving at least one item of sensor information. Preferably, the sensor device may be characterized by containing at least one element of dysprosium, terbium, praseodymium, neodymium, or gadolinium.

The term "item of sensor information" as used herein is a broad term and is to be given its ordinary and customary meaning to a person of ordinary skill in the art and is not to be limited to a special or customized meaning. The term specifically may refer, without limitation, to an indication of information retrieved by the sensor device. Specifically, the item of sensor information may be an indication of information regarding the performing of the at least one household task and/or properties or characteristics of objects or environmental matter. Thus, the item of sensor information may for example be an image or video taken by the camera, e.g. by the 2D camera and/or the 3D camera, location information, such as GPS information and/or odometrical or travel distance information, information on a quality of a connection, such as on a Wi-Fi connection and/or a Bluetooth connection, or other information.

The autonomous household appliance may be operable optionally or electively with and without the smart device being coupled to the autonomous household appliance. Thus, the autonomous household appliance may specifically be operable with the smart device being coupled to the autonomous household appliance, specifically to the interface element of the autonomous household appliance. Additionally or alternatively, the autonomous household appliance may be operable without the smart device being coupled to the autonomous household appliance. Specifically, the autonomous household appliance may be operable electively with and without the smart device being coupled to the autonomous household appliance. Thus, the autonomous household appliance may for example actively select to operate, specifically to perform the household task, with or without the smart device.

The at least one sensor device of the smart device may particularly be one or more of a 2D camera, specifically an imaging device for taking two dimensional images or videos, a 3D camera, specifically an imaging device for taking three dimensional images or videos, more specifically an imaging device configured for using a shape-from-motion algorithm for determining three dimensional data, a Time-of-Flight (ToF) camera, a camera using structured or patterned light or illumination, a stereo camera, a GPS sensor, a WiFi sensor, a Bluetooth sensor, and an odometrical sensor, specifically a travel distance sensor.

The autonomous household appliance may be configured for initially or intermediately being set up by using the smart device. Thus, the smart device may be used for setting up the autonomous household appliance initially and/or intermediately.

As an example, the autonomous household appliance, for example a low-cost consumer device, may be coupled to the smart device, e.g. to a multi-functional device such as a smartphone, for an initial or an intermediate set up. Thus, the function or functionality, e.g. an additional function, of the smart device, specifically an only temporarily needed function of the smart device, may be provided to the autonomous household appliance, for example by using a computer program or app. Specifically, the additional function provided by the smart device, e.g. by the smartphone, may for example concern a 2D- and/or 3D-camera function, a GPS function, a WiFi- or Bluetooth-function, or the like.

In particular, the smart device, e.g. the smartphone, may be used to install soft- or firmware updates on the autonomous household appliance, specifically on the robot. Additionally or alternatively, the smart device may be used to install additional functionality on the autonomous household appliance, for example for maintenance purposes, such as a remote maintenance. Thus, the smart device may be used, for example, to obtain an internet connection, such as a wireless internet connection and to transmit data from a server to the autonomous household appliance or from the autonomous household appliance to a server.

The autonomous household appliance may comprise at least one onboard sensor, wherein the onboard sensor may specifically be configured for determining at least one parameter. The term "onboard sensor" as used herein is a broad term and is to be given its ordinary and customary meaning to a person of ordinary skill in the art and is not to be limited to a special or customized meaning. The term specifically may refer, without limitation, to an arbitrary sensor or sensor device arranged on or within the autonomous household appliance. Specifically, the onboard sensor may be mounted on or within a housing of the autonomous household appliance.

The at least one onboard sensor may comprise at least one sensor selected from the group consisting of: a WiFi sensor, specifically a WiFi receiver, more specifically a WiFi signal strength sensor; a LiFi sensor, specifically a LiFi receiver, more specifically a LiFi signal strength sensor; a NFC sensor, specifically a NFC receiver, more specifically a NFC signal strength sensor; a Bluetooth sensor, specifically a Bluetooth receiver, more specifically a Bluetooth signal strength sensor; an ultrasonic sensor; a drop sensor; a compass; an odometrical sensor; an atmospheric pressure sensor. Thus, the at least one parameter for example determined by the onboard sensor may be one or more of a WiFi signal strength, a Bluetooth signal strength, an orientation information, such as an orientation in relation of points on a compass, a travel distance, such as a travel distance of the autonomous household appliance or an atmospheric pressure, specifically an atmospheric pressure of the atmosphere around the autonomous household appliance.

The autonomous household appliance may further be configured for using the at least one onboard sensor in combination with the at least one sensor device of the smart device. In particular, the autonomous household appliance may be configured for combining at least one function of the onboard sensor with at least one function of the sensor device. Thus, for example, the autonomous household appliance may be configured for using information gathered by the onboard sensor in combination with information retrieved by the sensor device. Specifically, the item of sensor information retrieved by the sensor device may specifically be combined with the parameter of the onboard sensor and may in combination be used by the autonomous household appliance.

In particular, a map, specifically a map of an environment of the autonomous household appliance, may be created from the combination of at least one function of the onboard sensor and the item of sensor information retrieved by the sensor device. Thus, as an example, the onboard sensor function may specifically comprise a simultaneous localization and mapping (SLAM) algorithm, wherein the SLAM algorithm may be used for creating the map.

Further, the autonomous household appliance may be configured to add the at least one parameter determined by the onboard sensor to the map. Thus, as an example, the autonomous household appliance may be configured for adding the parameter gathered or determined by the onboard sensor to the map created by using the SLAM algorithm.

The autonomous household appliance may be configured for using the map in combination with the at least one parameter determined by the onboard sensor to navigate. Specifically, the autonomous household appliance may be configured for using the map in combination with the at least one parameter specifically for determining travel routes.

The autonomous household appliance may comprise at least one smart device holder. Specifically, the autonomous household appliance may comprise at least one mechanical holder, for holding the smart device.

Further, the autonomous household appliance may comprise motion means configured to move, specifically bend, tilt or rotate the smart device and/or the smart device holder. Thus, the smart device may be moved by the autonomous household appliance.

In a further aspect of the invention a household system is disclosed. The household system comprises at least one autonomous household appliance as disclosed above or as described in further detail below. Thus, for possible definitions of most of the terms used herein, reference may be made to the description of the autonomous household appliance as disclosed in the first aspect of the present invention. The household system further comprises at least one smart device configured for being coupled to the autonomous household appliance.

The smart device may comprise at least one sensor device and at least one smart device interface reversibly couplable with the interface element of the autonomous household appliance. In particular, the smart device may be configured for providing at least one item of sensor information retrieved by the sensor device to the autonomous household appliance via the smart device interface.

In a further aspect of the invention, a method for temporarily augmenting the functionality of an autonomous household appliance by using additional functionality of at least one smart device is disclosed. The method comprises the following steps, which may be performed in the given order. However, a different order may also be possible. Further, one or more than one or even all the method steps may be performed once or repeatedly. Further, the method steps may be performed in a timely overlapping fashion or even in parallel. The method may further comprise additional method steps which are not listed.

The method comprises the following steps:
i) providing an autonomous household appliance, the autonomous household appliance configured for performing at least one household task, wherein the autonomous household appliance comprises at least one task unit arranged for performing the household task, wherein the autonomous household appliance further comprises an interface element having at least one wire-bound coupling means;
ii) providing at least one smart device;
iii) releasably and temporarily coupling the autonomous household appliance to the smart device by using the interface element;
iv) accessing at least one sensor device of the smart device via the interface element by the autonomous household appliance; and
v) making use of at least one item of sensor information retrieved by the sensor device when performing the household task.

Specifically, the method may comprise temporarily augmenting the functionality of the autonomous household appliance as disclosed above or as disclosed in further detail below by using the additional functionality of the at least one smart device. Thus, for possible definitions of most of the terms used herein, reference may be made to the description of the autonomous household appliance as disclosed in the first aspect of the present invention.

The method may comprise using at least one of the autonomous household appliance, specifically the autonomous household appliance as disclosed above or as disclosed in further detail below, or the household system, specifically the household system as disclosed above or as disclosed in further detail below. Thus, again, for possible definitions of most of the terms used herein, reference may be made to the description of the autonomous household appliance or the description of the household system as disclosed above or as disclosed in further detail below.

In particular, the autonomous household appliance, e.g. an autonomously moving robot, may be augmented by the smart device, e.g. the smartphone, for example to perform an initial or intermediate setup procedure.

In a further aspect of the present invention a computer program is disclosed, the computer program comprising instructions which, when the program is executed by an autonomous household appliance, specifically by at least one processor of an autonomous household appliance, more specifically by at least one processor of a task unit of an autonomous household appliance, cause the autonomous household appliance to carry out steps iv) and v) of the method for temporarily augmenting the functionality of an autonomous household appliance by using additional functionality of at least one smart device.

Specifically, the computer program, such as program code means, may be stored on a computer-readable data carrier. Thus, further disclosed and proposed herein is a data carrier having a data structure stored thereon, which, after loading into a computer or computer network, such as into an autonomous household appliance, such as into a working memory or main memory of the computer or computer network, may execute the method according to one or more of the embodiments disclosed herein, specifically method steps iv) and v) of the method.

The devices and methods according to the present invention may provide a large number of advantages over known methods and devices for performing at least one household task. Thus, the devices and methods as proposed herein may be economically more efficient, particularly less cost intensive, than devices and methods for performing a household task known from the art. Specifically, the devices and methods proposed herein may be less expensive than common methods and devices, which particularly might be beneficial since consumer devices in general might often be very cost sensitive. In particular, the devices and methods according to the present invention may provide more features, specifically nice-to-have features, for example higher computing power and 3D-measurement capabilities, which in common methods and devices may be omitted, for example in order to reduce product costs. Specifically, the suggested devices and methods may provide measurement capabilities which in common devices and methods may be omitted due to additional costs that may occur for calibration or obeying legislation, for example for measurement directives or radio emitting device directives.

Further, the suggested devices and methods may be lighter than known devices and methods. Specifically, the devices and methods according to the present invention may allow a spatial separation of constantly used functions and of rarely used functions. In particular, devices configured for performing rarely or only temporarily used functions, such as for example functions required for set up or in a set up step, may be spatially separated from devices configured for performing constantly used functions such as for example necessary functions for performing the household task. Due to this possible spatial separation, the suggested devices may be more conveniently lifted or moved around by a user than common devices. Additionally or alternatively, the possible spatial separation may allow a targeted adaption to environmental conditions. Specifically, outdoor functionality, for example difficult and/or cost intensive design protecting electronics from sun and rain impact, may be provided only where needed, reducing costs and expenses compared to methods and devices known in the art.

Summarizing and without excluding further possible embodiments, the following embodiments may be envisaged:
Embodiment 1: An autonomous household appliance configured for performing at least one household task, wherein the autonomous household appliance comprises at least one task unit arranged for performing the household task, wherein the autonomous household appliance further comprises an interface element having at least one wire-bound coupling means, wherein the interface element is configured for releasably and temporarily coupling the autonomous household appliance to at least one smart device, wherein the autonomous household appliance is configured for accessing at least one sensor device of the at least one smart device via the interface element and for making use of at least one item of sensor information retrieved by the sensor device when performing the household task.
Embodiment 2: The autonomous household appliance according to the preceding embodiment, wherein the autonomous household appliance is operable optionally or electively with and without the smart device being coupled to the autonomous household appliance.
Embodiment 3: The autonomous household appliance according to any one of the preceding embodiments, wherein the autonomous household appliance is an autonomously moving robot, specifically an autonomously moving robot selected from the group consisting of: a mowing robot; a cleaning robot, specifically a robotic vacuum cleaner, a wet-mopping robot; or a combination thereof.
Embodiment 4: The autonomous household appliance according to any one of the preceding embodiments, wherein the household task is selected from the group consisting of: cleaning, specifically floor cleaning, more specifically vacuum cleaning or wet mopping; maintenance; surveillance, specifically image or video based surveillance.
Embodiment 5: The autonomous household appliance according to any one of the preceding embodiments, wherein the task unit comprises at least one processor.
Embodiment 6: The autonomous household appliance according to the preceding embodiment, wherein the processor is configured by software for controlling the at least one household task.
Embodiment 7: The autonomous household appliance according to any one of the two preceding embodiments, wherein the processor, specifically by software, is configured for determining if the smart device is coupled to the interface element.
Embodiment 8: The autonomous household appliance according to any one of the three preceding embodiments, wherein the processor, in case a coupling of the smart device to the interface element is detected, is configured for accessing the at least one item of sensor information and for making use of the at least one item of sensor information in the controlling of the household task.
Embodiment 9: The autonomous household appliance according to any one of the preceding embodiments, wherein the at least one sensor device of the smart device is one or more of a 2D camera, specifically an imaging device for taking two dimensional images or videos, a 3D camera, specifically an imaging device for taking three dimensional images or videos, more specifically an imaging device configured for using a shape-from-motion algorithm for determining three dimensional data, a Time-of-Flight (ToF) camera, a camera using structured or patterned light or illumination, a stereo camera, a GPS sensor, a WiFi sensor, a Bluetooth sensor, and an odometrical sensor, specifically a travel distance sensor.
Embodiment 10: The autonomous household appliance according to any one of the preceding embodiments, wherein the autonomous household appliance is configured for initially or intermediately being set up by using the smart device.
Embodiment 11: The autonomous household appliance according to any one of the preceding embodiments, wherein the autonomous household appliance comprises at least one onboard sensor, wherein the at least one onboard sensor is configured for determining at least one parameter.
Embodiment 12: The autonomous household appliance according to the preceding embodiment, wherein the at least one onboard sensor comprises at least one sensor selected from the group consisting of: a WiFi sensor, specifically a WiFi receiver, more specifically a WiFi signal strength sensor; a LiFi sensor, specifically a LiFi receiver, more specifically a LiFi signal strength sensor; a NFC sensor, specifically a NFC receiver, more specifically a NFC signal strength sensor; a Bluetooth sensor, specifically a Bluetooth receiver, more specifically a Bluetooth signal strength sensor; an ultrasonic sensor; a drop sensor; a compass; an odometrical sensor; an atmospheric pressure sensor.
Embodiment 13: The autonomous household appliance according to any one of the two preceding embodiments, wherein the autonomous household appliance is configured for using the at least one onboard sensor in combination with the at least one sensor device of the smart device.
Embodiment 14: The autonomous household appliance according to the preceding embodiment, wherein a map, specifically a map of an environment of the autonomous household appliance, is created from the combination of at least one function of the onboard sensor and the sensor information retrieved by the sensor device.
Embodiment 15: The autonomous household appliance according to the preceding embodiment, wherein the onboard sensor function comprises a simultaneous localization and mapping (SLAM) algorithm, wherein the SLAM algorithm is used for creating the map.
Embodiment 16: The autonomous household appliance according to any one of the two preceding embodiments, wherein the autonomous household appliance is configured to add the at least one parameter determined by the onboard sensor to the map.
Embodiment 17: The autonomous household appliance according to any one of the three preceding embodiments, wherein the autonomous household appliance is configured for using the map in combination with the at least one parameter determined by the onboard sensor to navigate, specifically for determining travel routes.
Embodiment 18: The autonomous household appliance according to any one of the preceding embodiments, wherein the autonomous household appliance comprises at least one smart device holder, specifically a mechanical holder, for holding the smart device.
Embodiment 19: The autonomous household appliance according to the preceding embodiment, wherein the autonomous household appliance further comprises motion means configured to move, specifically bend, tilt or rotate, the smart device and/or the smart device holder.
Embodiment 20: A household system, the household system comprising at least one autonomous household appliance according to any one of the preceding embodiments, wherein the household system further comprises at least one smart device configured for being coupled to the autonomous household appliance.
Embodiment 21: The household system according to the preceding embodiment, wherein the smart device comprises at least one sensor device and at least one smart device interface reversibly couplable with the interface element of the autonomous household appliance, the smart device being configured for providing at least one item of sensor information retrieved by the sensor device to the autonomous household appliance via the smart device interface.
Embodiment 22: The household system according to any one of the two preceding embodiments, wherein the smart device comprises at least one mobile electronics device selected from the group consisting of: a cell phone; a smart phone; a computer; a phablet computer; a tablet computer; a laptop; a mobile computer, specifically a mobile computer having at least one sensor device such as a camera; a mobile phone capable of performing functions of a computer; a mobile phone having a touchscreen interface, internet access, and an operating system capable of running downloaded apps.
Embodiment 23: A method for temporarily augmenting the functionality of an autonomous household appliance by using additional functionality of at least one smart device, specifically by using an autonomous household appliance according to any one of the preceding embodiments referring to an autonomous household appliance, the method comprising:
   i) providing an autonomous household appliance, the autonomous household appliance configured for performing at least one household task, wherein the autonomous household appliance comprises at least one task unit arranged for performing the household task, wherein the autonomous household appliance further comprises an interface element having at least one wire-bound coupling means;
   ii) providing at least one smart device;
   iii) releasably and temporarily coupling the autonomous household appliance to the smart device by using the interface element;
   iv) accessing at least one sensor device of the smart device via the interface element by the autonomous household appliance; and
   v) making use of at least one item of sensor information retrieved by the sensor device when performing the household task.
Embodiment 24: The method according to the preceding embodiment, wherein the method comprises using at least one of the autonomous household appliance according to any one of the preceding embodiments referring to an autonomous household appliance or the household system according to any one of the preceding embodiments referring to a household system.
Embodiment 25: A computer program comprising instructions which, when the program is executed by an autonomous household appliance, specifically by at least one processor of an autonomous household appliance, more specifically by at least one processor of a task unit of an autonomous household appliance, cause the autonomous household appliance to carry out steps iv) and v) of the method according to the preceding embodiment.

### Short description of the Figures:

Further optional features and embodiments will be disclosed in more detail in the subsequent description of embodiments, preferably in conjunction with the dependent claims. Therein, the respective optional features may be realized in an isolated fashion as well as in any arbitrary feasible combination, as the skilled person will realize. The scope of the invention is not restricted by the preferred embodiments. The embodiments are schematically depicted in the Figures. Therein, identical reference numbers in these Figures refer to identical or functionally comparable elements.

In the Figures:
- Figure 1: illustrates a perspective view of an embodiment of a household system performing a task; and
- Figure 2: illustrates a flow chart of a method for temporarily augmenting the functionality of an autonomous household appliance by using additional functionality of at least one smart device.

### Detailed description of the embodiments

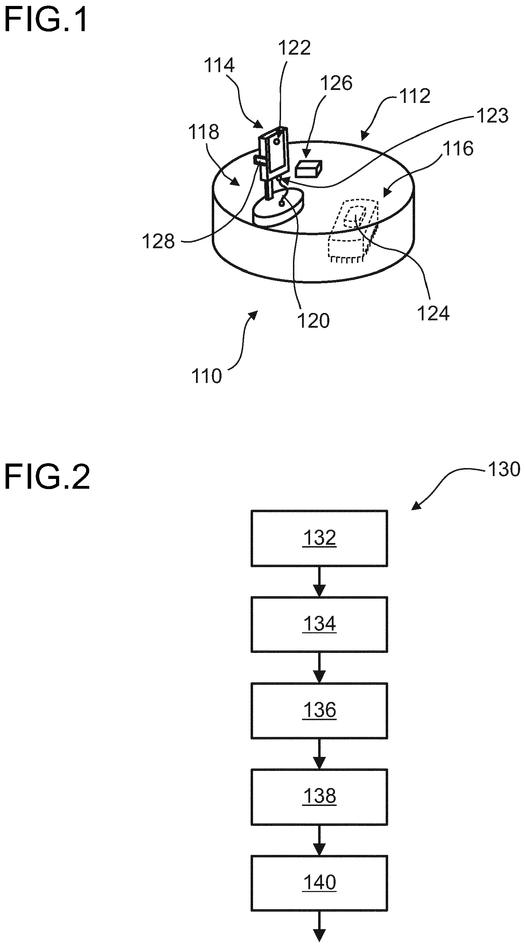

Figure 1 illustrates an embodiment of a household system 110 comprising at least one autonomous household appliance 112 and at least one smart device 114 configured to be coupled to the autonomous household appliance 112. The autonomous household appliance 112 is configured for performing at least one household task, such as for example cleaning, specifically floor cleaning, more specifically vacuum cleaning or wet mopping; maintenance; surveillance, specifically image or video based surveillance, or the like. Thus, the autonomous household appliance 112 may specifically be an autonomously moving robot, such as a mowing robot, a cleaning robot, for example a robotic vacuum cleaner and/or a wet-mopping robot, or a combination thereof.

The autonomous household appliance 112 may be operable optionally or electively with and without the smart device 114 being coupled to the autonomous household appliance 112. Thus, the autonomous household appliance 112 may specifically be operable without the smart device 114 being coupled to the autonomous household appliance 112. Additionally or alternatively, the autonomous household appliance 112, specifically as household system 110, may be operable with the smart device 114 being coupled to the autonomous household appliance 112. The autonomous household appliance 112 may for example actively select to operate, in particular to perform the household task, with or without the smart device 114.

The autonomous household appliance 112 comprises at least one task unit 116 arranged for performing the household task. The autonomous household appliance 112 further comprises an interface element 118 having at least one wire-bound coupling means 120. The interface element 118 is configured for releasably and temporarily coupling the autonomous household appliance 112 to the at least one smart device 114. The autonomous household appliance 112 is configured for accessing at least one sensor device 122 of the at least one smart device 114 via the interface element 118 and for making use of at least one item of sensor information retrieved by the sensor device 122 when performing the household task.

The smart device 114 may comprise at least one sensor device 122. Further, the smart device 114 may comprise at least one smart device interface 123 reversibly couplable with the interface element 118 of the autonomous household appliance 112. The smart device 114 may be configured for providing the at least one item of sensor information retrieved by the sensor device 122 to the autonomous household appliance 112 via the smart device interface 123.

The task unit 116 may for example comprise at least one processor 124. The processor 124 may specifically be configured by software for controlling the at least one household task. Additionally or alternatively, the processor 124, specifically by software, may be configured for determining if the smart device 114 is coupled to the interface element 118, particularly to the autonomous household appliance 112. The processor 124 may, in case a coupling of the smart device 114 to the interface element 118 is detected, for example be configured for accessing the at least one item of sensor information and for making use of the at least one item of sensor information in the controlling of the household task.

The at least one sensor device 122 of the smart device 114 may for example be a camera, specifically an imaging device for taking two dimensional or three dimensional images or videos. Thus, the item of sensor information may for example be an image or video taken by the camera.

The autonomous household appliance 112 may further comprise at least one onboard sensor 126. The onboard sensor 126 may specifically be configured for determining at least one parameter. As an example, the onboard sensor 126 may be a WiFi sensor, specifically a WiFi receiver, more specifically a WiFi signal strength sensor; a LiFi sensor, specifically a LiFi receiver, more specifically a LiFi signal strength sensor; a NFC sensor, specifically a NFC receiver, more specifically a NFC signal strength sensor; a Bluetooth sensor, specifically a Bluetooth receiver, more specifically a Bluetooth signal strength sensor; an ultrasonic sensor; a drop sensor; a compass; an odometrical sensor; an atmospheric pressure sensor.

The autonomous household appliance 112 may for example be configured for using the at least one onboard sensor 126 in combination with the at least one sensor device 122 of the smart device 114. Specifically, a map, such as a map of an environment of the autonomous household appliance 112, may be created from the combination of the onboard sensor 126 and the sensor device 122, specifically from the combination of a function of the onboard sensor 126 and the sensor information retrieved by the sensor device 114. Thus, as an example, the smart device 114, e.g. a smartphone, may be used for localization and mapping. In particular, the sensor device 122, e.g. a 2D or 3D camera of the smartphone, may be used in combination with a SLAM algorithm to create a map of the environment.

Further, the autonomous household appliance 112 may be configured to add the at least one parameter determined by the onboard sensor 126 to the map. Thus, as an example, the parameter, specifically further parameters recorded by the at least one onboard sensor 126, may be added to the map, e.g. recorded by the map. Specifically, parameters of sensors, especially low cost sensors, incorporated in the robot, such as WiFi or Bluetooth receivers recording signal strengths or directions, atmospheric pressure sensors, odometrical sensors, ultrasonic sensors, drop sensors, compass, or the like, may be added to the map.

In particular, the autonomous household appliance 112, e.g. the robot, may be configured to use the parameter retrieved by the onboard sensor 126, specifically in combination with the map for orientation. Thus, the autonomous household appliance 112 may for example use the parameter in combination with a previously recorded map for finding a shortest travelling distance from its current location to, for example, a charging station of the autonomous household appliance 112, e.g. a short route into a room with a charging station.

Additionally or alternatively, the autonomous household appliance 112 for example coupled to the smart device 114, e.g. the robot augmented by the smartphone, may be used for recording images or videos of an environment of the autonomous household appliance 112. Thus, the autonomous household appliance 112 may be used for maintenance and/or surveillance purposes.

The autonomous household appliance 112 may comprise at least one smart device holder 128, specifically a mechanical holder, for holding the smart device 114. Thus, as an example, the robot may incorporate a mechanical holder for holding the smartphone. Further, the autonomous household appliance 112 may comprise motion means configured to move, specifically bend, tilt or rotate, the smart device 114 and/or the smart device holder 128. Thus, as an example, the robot may particularly incorporate means to bend, tilt, rotate, etc. the smartphone and/or its holder.

Specifically, the autonomous household appliance 112, for example, being configured for using the at least one onboard sensor 126 in combination with the at least one sensor device 122 of the smart device 114, may allow recording odometry data of the autonomous household appliance 112 while taking a video of the environment or surroundings of the autonomous household appliance 112, e.g. when performing the household task. In particular, the odometry data which may be retrieved by the onboard sensor 126 of the autonomous household appliance 112 may be used in combination with the video of the environment taken by the sensor device 122 of the smart device 114, e.g. by the camera of the smartphone. Specifically, the video data may be transformed into 3D-data using algorithms such as a shape-from-motion algorithm, for example a shape-from-motion algorithm known from the art. The 3D-data may for example be more accurate, when the odometry data is used for estimating the traveled distance. Additionally or alternatively, the odometry sensors may for example be calibrated using the distances estimated from the shape-from-motion algorithm.

As an example, the household system 110, specifically the autonomous household appliance 112 and the smart device 114, may for example be used for recording data when not performing the household task. Thus, the autonomous household appliance 112 and the smart device 114 coupled to the autonomous household appliance 112 may for example be used for creating a map of an apartment, such as a 2D and/or 3D map. In particular, the map, e.g. the 3D-map, may be recorded for virtual reality or augmented reality applications. Thus, the autonomous household appliance 112 may be used for generating current room pictures, for example in order to avoid collision of the user with objects within an augmented reality. Additionally or alternatively, the map, e.g. the 3D map, generated by the autonomous household appliance 112 may be used for redecorating purposes. Specifically, a user may be able to walk through his/her home with VR glasses on, wherein all real objects, as detected by the household system 110, e.g. by the autonomous household appliance 112 and the smart device 114, may be integrated into the augmented reality.

Figure 2 illustrates a flow chart of a method 130 for temporarily augmenting the functionality of an autonomous household appliance 112 by using additional functionality of at least one smart device 114. The method 130 comprises the following steps:
i) providing (method step 132) an autonomous household appliance 112, the autonomous household appliance 112 configured for performing at least one household task, wherein the autonomous household appliance 112 comprises at least one task unit 116 arranged for performing the household task, wherein the autonomous household appliance 112 further comprises an interface element 118 having at least one wire-bound coupling means 120;
ii) providing (method step 134) at least one smart device 114;
iii) releasably and temporarily coupling (method step 136) the autonomous household appliance 112 to the smart device 114 by using the interface element 118;
iv) accessing (method step 138) at least one sensor device 122 of the smart device 114 via the interface element 118 by the autonomous household appliance 112; and
v) making use (method step 140) of at least one item of sensor information retrieved by the sensor device 122 when performing the household task.

### List of reference numbers

- 110: household system
- 112: autonomous household appliance
- 114: smart device
- 116: task unit
- 118: interface element
- 120: wire-bound coupling means
- 122: sensor device
- 123: smart device interface
- 124: processor
- 126: onboard sensor
- 128: smart device holder
- 130: method for temporarily augmenting the functionality of an autonomous household appliance by using additional functionality of at least one smart device
- 132: step i) providing an autonomous household appliance
- 134: step ii) providing at least one smart device
- 136: step iii)
- 138: step iv)
- 140: step v)

## Claims

1. An autonomous household appliance (112) configured for performing at least one household task, wherein the autonomous household (112) appliance comprises at least one task unit (116) arranged for performing the household task, wherein the autonomous household appliance (112) further comprises an interface element (118) having at least one wire-bound coupling means (120), wherein the interface element (118) is configured for releasably and temporarily coupling the autonomous household appliance (112) to at least one smart device (114), wherein the autonomous household appliance (112) is configured for accessing at least one sensor device (122) of the at least one smart device (114) via the interface element (118) and
**characterized in that**
the autonomous household appliance (112) is configured for making use of at least one item of sensor information retrieved by the sensor device (122) when performing the household task.

2. The autonomous household appliance (112) according to the preceding claim, wherein the autonomous household appliance (112) is operable optionally or electively with and without the smart device (114) being coupled to the autonomous household appliance (112).

3. The autonomous household appliance (112) according to any one of the preceding claims, wherein the task unit (116) comprises at least one processor (124), wherein the processor (124) is configured by software for controlling the at least one household task.

4. The autonomous household appliance (112) according to the preceding claim, wherein the processor (124) is configured for determining if the smart device (114) is coupled to the interface element (118).

5. The autonomous household appliance (112) according to any one of the preceding claims, wherein the autonomous household appliance (112) comprises at least one onboard sensor (126), wherein the at least one onboard sensor (126) is configured for determining at least one parameter.

6. The autonomous household appliance (112) according to the preceding claim, wherein the autonomous household appliance (112) is configured for using the at least one onboard sensor (126) in combination with the at least one sensor device (122) of the smart device (114).

7. The autonomous household appliance (112) according to the preceding claim, wherein a map is created from the combination of at least one function of the onboard sensor (126) and the sensor information retrieved by the sensor device (122).

8. The autonomous household appliance (112) according to the preceding claim, wherein the autonomous household appliance (112) is configured to add the at least one parameter determined by the onboard sensor (126) to the map.

9. The autonomous household appliance (112) according to any one of the two preceding claims, wherein the autonomous household appliance (112) is configured for using the map in combination with the at least one parameter determined by the onboard sensor (126) to navigate, specifically for determining travel routes.

10. The autonomous household appliance (112) according to any one of the preceding claims, wherein the autonomous household appliance (112) comprises at least one smart device holder (128) for holding the smart device (114), wherein the autonomous household appliance (112) further comprises motion means configured to move, specifically bend, tilt or rotate, one or both of the smart device (114) and the smart device holder (128).

11. A household system (110), the household system (110) comprising at least one autonomous household appliance (112) according to any one of the preceding claims, wherein the household system (110) further comprises at least one smart device (114) configured for being coupled to the autonomous household appliance (112).

12. The household system (110) according to the preceding claim, wherein the smart device (114) comprises at least one sensor device (122) and at least one smart device interface (123) reversibly couplable with the interface element (118) of the autonomous household appliance (112), the smart device (114) being configured for providing at least one item of sensor information retrieved by the sensor device (122) to the autonomous household appliance (112) via the smart device interface (123).

13. A method (130) for temporarily augmenting the functionality of an autonomous household appliance (112) by using additional functionality of at least one smart device (114) the method (130) comprising:
i) providing (132) an autonomous household appliance providing an autonomous household appliance, the autonomous household appliance (112) configured for performing at least one household task, wherein the autonomous household appliance (112) comprises at least one task unit (116) arranged for performing the household task, wherein the autonomous household appliance (112) further comprises an interface element (118) having at least one wire-bound coupling means (120);
ii) providing (134) at least one smart device (114);
iii) releasably and temporarily coupling (136) the autonomous household appliance (112) to the smart device (114) by using the interface element (118);
iv) accessing (138) at least one sensor device (122) of the smart device (114) via the interface element (118) by the autonomous household appliance (112); **characterized in that** the method further comprises
v) making use (140) of at least one item of sensor information retrieved by the sensor device (122) when performing the household task.

14. The method (130) according to the preceding claim, wherein the method (130) comprises using at least one of the autonomous household appliance (112) according to any one of the preceding claims referring to an autonomous household appliance (112) or the household system (110) according to any one of the preceding claims referring to a household system (110).

15. A computer program comprising instructions which, when the program is executed by an autonomous household appliance (112) cause the autonomous household appliance (112) to carry out steps iv) and v) of the method (130) according to the preceding claim.

## Patentansprüche

1. Autonomes Haushaltsgerät (112), das dazu ausgelegt ist, mindestens eine Haushaltsaufgabe durchzuführen, wobei das autonome Haushaltsgerät (112) mindestens eine Aufgabeneinheit (116) umfasst, die dazu eingerichtet ist, die Haushaltsaufgabe durchzuführen, wobei das autonome Haushaltsgerät (112) ferner ein Schnittstellenelement (118) umfasst, das mindestens ein drahtgebundenes Kopplungsmittel (120) aufweist, wobei das Schnittstellenelement (118) dazu ausgelegt ist, das autonome Haushaltsgerät (112) lösbar und vorübergehend mit mindestens einer intelligenten Vorrichtung (114) zu koppeln, wobei das autonome Haushaltsgerät (112) dazu ausgelegt ist, über das Schnittstellenelement (118) auf mindestens eine Sensorvorrichtung (122) der mindestens einen intelligenten Vorrichtung (114) zuzugreifen, und **dadurch gekennzeichnet, dass**
das autonome Haushaltsgerät (112) dazu ausgelegt ist, mindestens ein Element von durch die Sensorvorrichtung (122) abgerufenen Sensorinformationen bei Durchführen der Haushaltsaufgabe zu nutzen.

2. Autonomes Haushaltsgerät (112) nach dem vorhergehenden Anspruch, wobei das autonome Haushaltsgerät (112) optional oder wahlweise mit oder ohne Kopplung der intelligenten Vorrichtung (114) mit dem autonomen Haushaltsgerät (112) betreibbar ist.

3. Autonomes Haushaltsgerät (112) nach einem der vorhergehenden Ansprüche, wobei die Aufgabeneinheit (116) mindestens einen Prozessor (124) umfasst, wobei der Prozessor (124) durch Software zum Steuern der mindestens einen Haushaltsaufgabe ausgelegt ist.

4. Autonomes Haushaltsgerät (112) nach dem vorhergehenden Anspruch, wobei der Prozessor (124) dazu ausgelegt ist, zu bestimmen, ob die intelligente Vorrichtung (114) mit dem Schnittstellenelement (118) gekoppelt ist.

5. Autonomes Haushaltsgerät (112) nach einem der vorhergehenden Ansprüche, wobei das autonome Haushaltsgerät (112) mindestens einen Bordsensor (126) umfasst, wobei der mindestens eine Bordsensor (126) dazu ausgelegt ist, mindestens einen Parameter zu bestimmen.

6. Autonomes Haushaltsgerät (112) nach dem vorhergehenden Anspruch, wobei das autonome Haushaltsgerät (112) dazu ausgelegt ist, den mindestens einen Bordsensor (126) in Kombination mit der mindestens einen Sensorvorrichtung (122) der intelligenten Vorrichtung (114) zu verwenden.

7. Autonomes Haushaltsgerät (112) nach dem vorhergehenden Anspruch, wobei eine Karte aus der Kombination mindestens einer Funktion des Bordsensors (126) und den durch die Sensorvorrichtung (122) abgerufenen Sensorinformationen erstellt wird.

8. Autonomes Haushaltsgerät (112) nach dem vorhergehenden Anspruch, wobei das autonome Haushaltsgerät (112) dazu ausgelegt ist, den durch den Bordsensor (126) bestimmten mindestens einen Parameter zu der Karte hinzuzufügen.

9. Autonomes Haushaltsgerät (112) nach einem der zwei vorhergehenden Ansprüche, wobei das autonome Haushaltsgerät (112) dazu ausgelegt ist, die Karte in Kombination mit dem durch den Bordsensor (126) bestimmten mindestens einen Parameter zum Navigieren, insbesondere zum Bestimmen von Fahrrouten, zu verwenden.

10. Autonomes Haushaltsgerät (112) nach einem der vorhergehenden Ansprüche, wobei das autonome Haushaltsgerät (112) mindestens einen intelligenten Vorrichtungshalter (128) zum Halten der intelligenten Vorrichtung (114) umfasst, wobei das autonome Haushaltsgerät (112) ferner Bewegungsmittel umfasst, die dazu ausgelegt sind, eines oder beide der intelligenten Vorrichtung (114) und des intelligenten Vorrichtungshalters (128) zu bewegen, insbesondere zu biegen, neigen oder drehen.

11. Haushaltssystem (110), wobei das Haushaltssystem (110) mindestens ein autonomes Haushaltsgerät (112) nach einem der vorhergehenden Ansprüche umfasst, wobei das Haushaltssystem (110) ferner mindestens eine intelligente Vorrichtung (114) umfasst, die dazu ausgelegt ist, mit dem autonomen Haushaltsgerät (112) gekoppelt zu sein.

12. Haushaltssystem (110) nach dem vorhergehenden Anspruch, wobei die intelligente Vorrichtung (114) mindestens eine Sensorvorrichtung (122) und mindestens eine intelligente Vorrichtungsschnittstelle (123) umfasst, die reversibel mit dem Schnittstellenelement (118) des autonomen Haushaltsgeräts (112) koppelbar ist, wobei die intelligente Vorrichtung (114) dazu ausgelegt ist, mindestens ein Element von durch die Sensorvorrichtung (122) abgerufenen Sensorinformationen über die intelligente Vorrichtungsschnittstelle (123) zu dem autonomen Haushaltsgerät (112) bereitzustellen.

13. Verfahren (130) zum vorübergehenden Erweitern der Funktionalität eines autonomen Haushaltsgeräts (112) unter Verwendung zusätzlicher Funktionalität mindestens einer intelligenten Vorrichtung (114), wobei das Verfahren (130) Folgendes umfasst:
i) Bereitstellen (132) eines autonomen Haushaltsgeräts, Bereitstellen eines autonomen Haushaltsgeräts, wobei das autonome Haushaltsgerät (112) dazu ausgelegt ist, mindestens eine Haushaltsaufgabe durchzuführen, wobei das autonome Haushaltsgerät (112) mindestens eine Aufgabeneinheit (116) umfasst, die dazu eingerichtet ist, die Haushaltsaufgabe durchzuführen, wobei das autonome Haushaltsgerät (112) ferner ein Schnittstellenelement (118) umfasst, das mindestens ein drahtgebundenes Kopplungsmittel (120) aufweist;
ii) Bereitstellen (134) mindestens einer intelligenten Vorrichtung (114);
iii) lösbares und vorübergehendes Koppeln (136) des autonomen Haushaltsgeräts (112) mit der intelligenten Vorrichtung (114) unter Verwendung des Schnittstellenelements (118);
iv) Zugreifen (138) auf mindestens eine Sensorvorrichtung (122) der intelligenten Vorrichtung (114) über das Schnittstellenelement (118) durch das autonome Haushaltsgerät (112); **dadurch gekennzeichnet, dass** das Verfahren ferner Folgendes umfasst
v) Nutzen (140) mindestens eines Elements von durch die Sensorvorrichtung (122) abgerufenen Sensorinformationen bei Durchführen der Haushaltsaufgabe.

14. Verfahren (130) nach dem vorhergehenden Anspruch, wobei das Verfahren(130) Verwenden mindestens eines des autonomen Haushaltsgeräts (112) nach einem der vorhergehenden Ansprüche, die ein autonomes Haushaltsgerät (112) betreffen, oder des Haushaltssystems (110) nach einem der vorhergehenden Ansprüche, die ein Haushaltssystem (110) betreffen, umfasst.

15. Computerprogramm, das Anweisungen umfasst, die, wenn das Programm durch ein autonomes Haushaltsgerät (112) ausgeführt wird, das autonome Haushaltsgerät (112) veranlassen, die Schritte iv) und v) des Verfahrens (130) nach dem vorhergehenden Anspruch auszuführen.

## Revendications

1. Appareil ménager autonome (112) configuré pour réaliser au moins une tâche ménagère, dans lequel l'appareil ménager autonome (112) comprend au moins une unité de tâche (116) agencée pour réaliser la tâche ménagère, dans lequel l'appareil ménager autonome (112) comprend en outre un élément d'interface (118) ayant au moins un moyen de couplage lié par câble (120), dans lequel l'élément d'interface (118) est configuré pour coupler de façons libérable et temporaire l'appareil ménager autonome (112) à au moins un dispositif intelligent (114), dans lequel l'appareil ménager autonome (112) est configuré pour accéder à au moins un dispositif capteur (122) de l'au moins un dispositif intelligent (114) par l'intermédiaire de l'élément d'interface (118), et
**caractérisé en ce que**
l'appareil ménager autonome (112) est configuré pour utiliser au moins un détail d'informations de capteur récupérées par le dispositif capteur (122) lors de la réalisation de la tâche ménagère.

2. Appareil ménager autonome (112) selon la revendication précédente, dans lequel l'appareil ménager autonome (112) est utilisable de façon optionnelle ou élective avec et sans le dispositif intelligent (114) couplé à l'appareil ménager autonome (112).

3. Appareil ménager autonome (112) selon l'une quelconque des revendications précédentes, dans lequel l'unité de tâche (116) comprend au moins un processeur (124), dans lequel le processeur (124) est configuré par logiciel pour commander l'au moins une tâche ménagère.

4. Appareil ménager autonome (112) selon la revendication précédente, dans lequel le processeur (124) est configuré pour déterminer si le dispositif intelligent (114) est couplé à l'élément d'interface (118).

5. Appareil ménager autonome (112) selon l'une quelconque des revendications précédentes, dans lequel l'appareil ménager autonome (112) comprend au moins un capteur embarqué (126), dans lequel l'au moins un capteur embarqué (126) est configuré pour déterminer au moins un paramètre.

6. Appareil ménager autonome (112) selon la revendication précédente, dans lequel l'appareil ménager autonome (112) est configuré pour utiliser l'au moins un capteur embarqué (126) en association avec l'au moins un dispositif capteur (122) du dispositif intelligent (114).

7. Appareil ménager autonome (112) selon la revendication précédente, dans lequel une carte est créée à partir de l'association d'au moins une fonction du capteur embarqué (126) et des informations de capteur récupérées par le dispositif capteur (122).

8. Appareil ménager autonome (112) selon la revendication précédente, dans lequel l'appareil ménager autonome (112) est configuré pour ajouter l'au moins un paramètre déterminé par le capteur embarqué (126) à la carte.

9. Appareil ménager autonome (112) selon l'une quelconque des deux revendications précédentes, dans lequel l'appareil ménager autonome (112) est configuré pour utiliser la carte en association avec l'au moins un paramètre déterminé par le capteur embarqué (126) pour naviguer, spécifiquement pour déterminer des itinéraires de déplacement.

10. Appareil ménager autonome (112) selon l'une quelconque des revendications précédentes, dans lequel l'appareil ménager autonome (112) comprend au moins un support de dispositif intelligent (128) pour supporter le dispositif intelligent (114), dans lequel l'appareil ménager autonome (112) comprend en outre un moyen de mouvement configuré pour mouvoir, spécifiquement pencher, incliner ou faire tourner, un ou les deux du dispositif intelligent (114) et du support de dispositif intelligent (128).

11. Système ménager (110), le système ménager (110) comprenant au moins un appareil ménager autonome (112) selon l'une quelconque des revendications précédentes, dans lequel le système ménager (110) comprend en outre au moins un dispositif intelligent (114) configuré pour être couplé à l'appareil ménager autonome (112).

12. Système ménager (110) selon la revendication précédente, dans lequel le dispositif intelligent (114) comprend au moins un dispositif capteur (122) et au moins une interface de dispositif intelligent (123) pouvant être couplée de façon réversible à l'élément d'interface (118) de l'appareil ménager autonome (112), le dispositif intelligent (114) étant configuré pour fournir au moins un détail d'informations de capteur récupérées par le dispositif capteur (122) à l'appareil ménager autonome (112) par l'intermédiaire de l'interface de dispositif intelligent (123).

13. Procédé (130) pour temporairement augmenter la fonctionnalité d'un appareil ménager autonome (112) en utilisant une fonctionnalité supplémentaire d'au moins un dispositif intelligent (114), le procédé (130) comprenant :
i) la fourniture (132) d'un appareil ménager autonome fournissant un appareil ménager autonome, l'appareil ménager autonome (112) étant configuré pour réaliser au moins une tâche ménagère, dans lequel l'appareil ménager autonome (112) comprend au moins une unité de tâche (116) agencée pour réaliser la tâche ménagère, dans lequel l'appareil ménager autonome (112) comprend en outre un élément d'interface (118) ayant au moins un moyen de couplage lié par câble (120) ;
ii) la fourniture (134) d'au moins un dispositif intelligent (114) ;
iii) le couplage libérable et temporaire (136) de l'appareil ménager autonome (112) au dispositif intelligent (114) en utilisant l'élément d'interface (118) ;
iv) l'accès (138) à au moins un dispositif capteur (122) du dispositif intelligent (114) par l'intermédiaire de l'élément d'interface (118) par l'appareil ménager autonome (112) ; **caractérisé en ce que** le procédé comprend en outre
v) l'utilisation (140) d'au moins un détail d'informations de capteur récupérées par le dispositif capteur (122) lors de la réalisation de la tâche ménagère.

14. Procédé (130) selon la revendication précédente, dans lequel le procédé (130) comprend l'utilisation d'au moins un de l'appareil ménager autonome (112) selon l'une quelconque des revendications précédentes faisant référence à un appareil ménager autonome (112) ou du système ménager (110) selon l'une quelconque des revendications précédentes faisant référence à un système ménager (110).

15. Programme d'ordinateur, comprenant des instructions qui, lorsque le programme est exécuté par un appareil ménager autonome (112), font en sorte que l'appareil ménager autonome (112) réalise les étapes iv) et v) du procédé (130) selon la revendication précédente.
